(19) Europäisches Patentamt
European Patent Office
Office européen des brevets

(11) **EP 0 849 869 A2**

## (12) EUROPÄISCHE PATENTANMELDUNG

(43) Veröffentlichungstag:
**24.06.1998 Patentblatt 1998/26**

(51) Int. Cl.6: **H02K 51/00**

(21) Anmeldenummer: **97203810.3**

(22) Anmeldetag: **05.12.1997**

(84) Benannte Vertragsstaaten:
**AT BE CH DE DK ES FI FR GB GR IE IT LI LU MC NL PT SE**
Benannte Erstreckungsstaaten:
**AL LT LV MK RO SI**

(30) Priorität: **17.12.1996 DE 19652490**

(71) Anmelder:
• **Philips Patentverwaltung GmbH**
**22335 Hamburg (DE)**
Benannte Vertragsstaaten:
**DE**

• **PHILIPS ELECTRONICS N.V.**
**5621 BA Eindhoven (NL)**
Benannte Vertragsstaaten:
**FR GB**

(72) Erfinder:
**Ackermann, Bernd,Dr.,**
**Philips Patentverw.GmbH**
**22335 Hamburg (DE)**

(74) Vertreter:
**von Laue, Hanns-Ulrich, Dipl.-Ing. et al**
**Philips Patentverwaltung GmbH,**
**Röntgenstrasse 24**
**22335 Hamburg (DE)**

## (54) Magnetisches Getriebe

(57) Die Erfindung bezieht sich auf ein magnetisches Getriebe mit wenigstens drei magnetisch zusammenwirkenden, relativ zueinander beweglichen Teilen (1, 6, 7), von denen eines zur Verbindung mit einer Antriebswelle, eines zur Verbindung mit einer Abtriebswelle und eines als feststehendes Teil vorgesehen ist, wobei ein erstes (6) und ein zweites (1) Teil Permanentmagnete mit längs des Umfanges abwechselnden Nord- und Südpolen aufweisen, und wobei ein drittes Teil (7) Zähne (7c) aus magnetisch leitendem Material aufweist, die zur Modulation der von den Permanentmagneten erzeugten Magnetfelder vorgesehen sind.

Es ist Aufgabe der vorliegenden Erfindung, ein magnetisches Getriebe der eingangs genannten Art zu schaffen, welches bei im wesentlichen gleichem übertragbarem Drehmoment eine größere mechanische Stabilität aufweist und welches fertigungstechnisch einfach herstellbar ist.

Hierzu ist vorgesehen, daß das dritte Teil (7) ein als magnetisches Rückschlußelement wirkendes, in sich geschlossenes Joch (7a) und auf der Innenseite (7b) des Joches (7a) $Z_1$ magnetisch leitende Zähne (7c) aufweist, und daß das dritte Teil (7) das erste (6) und das zweite Teil (1) umschließt.

Fig.1

**Beschreibung**

Die Erfindung bezieht sich auf ein magnetisches Getriebe mit wenigstens drei magnetisch zusammenwirkenden, relativ zueinander beweglichen Teilen, von denen eines zur Verbindung mit einer Antriebswelle, eines zur Verbindung mit einer Abtriebswelle und eines als feststehendes Teil vorgesehen ist, wobei ein erstes und ein zweites Teil Permanentmagnete mit längs des Umfanges abwechselnden Nord- und Südpolen aufweisen, und wobei ein drittes Teil Zähne aus magnetisch leitendem Material aufweist, die zur Modulation der von den Permanentmagneten erzeugten Magnetfelder vorgesehen sind.

Ein derartiges magnetisches Getriebe ist aus der EP 669 700 A1 bekannt. Bei diesem bekannten Getriebe ist das Zähne aufweisende dritte Teil als Mittelteil zwischen dem ersten und dem zweiten Teil angeordnet. Die einzelnen Zähne dieses dritten Teils sind durch Stege miteinander verbunden, welche jedoch sehr dünn sein müssen, da sie sonst den von den Magnetpolen des zweiten Teils erzeugten magnetischen Fluß kurzschließen. Die Stege zwischen den Zähnen des dritten Teils sind im Betrieb stark gesättigt.

Das Erfordernis der dünnen Stege zwischen den Zähnen des dritten Teiles hat zur Folge, daß das dritte Teil nur mit einer begrenzten mechanischen Stabilität gefertigt werden kann. Insbesondere bei magnetischen Getrieben, die größere Drehmomente übertragen sollen, ist dies ein großer Nachteil.

Es ist Aufgabe der vorliegenden Erfindung, ein magnetisches Getriebe der eingangs genannten Art zu schaffen, welches bei im wesentlichen gleichem übertragbarem Drehmoment eine größere mechanische Stabilität aufweist und welches fertigungstechnisch einfach herstellbar ist.

Diese Aufgabe ist erfindungsgemäß dadurch gelöst, daß das dritte Teil ein als magnetisches Rückschlußelement wirkendes, in sich geschlossenes Joch und auf der Innenseite des Joches $Z_1$ magnetisch leitende Zähne aufweist, und daß das dritte Teil das erste und das zweite Teil umschließt.

Gemäß der Erfindung ist das dritte Teil als äußeres Teil des magnetischen Getriebes angeordnet. Das dritte Teil weist auf seiner Außenseite ein in sich geschlossenes, magnetisch leitendes zylinderförmiges Joch auf, welches als magnetisches Rückschlußelement für den von den Permanentmagneten des ersten und des zweiten Teiles erregten Magnetflusses dient. Der Querschnitt dieses Joches sollte so groß gewählt werden, daß das magnetische Material dieses Joches während des Betriebes nur soweit in die Sättigung gerät, daß dadurch das von dem magnetischen Getriebe übertragene Drehmoment nicht in unzulässiger Weise reduziert wird.
Auf der Innenseite des Joches sind $Z_1$ magnetisch leitende Zähne angeordnet. Diese magnetisch leitenden, nach innen vorstehenden Zähne modulieren die von den Permanentmagneten des ersten bzw. zweiten Teils erzeugten Magnetfelder, wodurch in Wechselwirkung mit den Permanentmagneten des ersten bzw. zweiten Teils Kräfte und Drehmomente entstehen.

Diese Konstruktion hat den Vorteil, daß der Querschnitt des Joches des dritten Teils so groß gewählt werden kann, wie es mechanisch erforderlich ist, ohne die Funktionsweise des magnetischen Getriebes zu beeinträchtigen.

Eine vorteilhafte Ausgestaltung der Erfindung ist dadurch gekennzeichnet, daß das erste Teil $p_1$ Paare von Nord- und Südpolen aufweist, daß das zweite Teil $p_2$ Paare von Nord- und Südpolen aufweist, wobei $p_2 < p_1$ ist, und daß das erste Teil mit der größeren Anzahl von Polen als mittleres Teil zwischen dem dritten und dem zweiten Teil angeordnet ist.

Das von dem zweiten Teil mit der geringeren Anzahl von Polen erzeugte Magnetfeld wird mittels der Zähne des dritten Teils moduliert. Dieses modulierte Magnetfeld wirkt dann mit den Permanentmagneten des ersten Teils zusammen, die sich nach dem modulierten Magnetfeld ausrichten. Die feldmodulierende Wirkung der Zähne ist an dem dem dritten Teil unmittelbar benachbartem Luftspalt besonders groß. Deshalb ist es günstig, das erste Teil mit der größeren Anzahl von Polen, welches sich entsprechend dem modulierten Magnetfeld ausrichten soll, als mittleres Teil zwischen dem ersten und dem zweiten Teil vorzusehen. Dadurch ist die magnetische Wechselwirkung zwischen dem modulierten Magnetfeld des zweiten Teils mit den Permanentmagneten des ersten Teils besonders gut.
Damit können größere Drehmomente übertragen werden.

Eine weitere vorteilhafte Ausgestaltung der Erfindung ist dadurch gekennzeichnet, daß die Paare von Nord- und Südpolen gleichmäßig über den Umfang des ersten und des zweiten Teils verteilt sind, daß die Zähne auf dem dritten Teil gleichmäßig über den Umfang verteilt sind, daß das erste Teil $p_1 = Z_1 \pm N$ Paare von Nord- und Südpolen aufweist, wobei N eine ganze Zahl ist, N=1,2,3..., und daß das zweite Teil $p_2 = N$ Paare von Nord- und Südpolen aufweist.

Unter einer gleichmäßigen Verteilung der Paare von Nord- und Südpolen über den Umfang wird verstanden, daß die Polbreite aller Pole gleich ist und daß die einzelnen Pole jeweils im gleichen Abstand zueinander angeordnet sind. Unter einer gleichmäßigen Verteilung der Zähne wird verstanden, daß die Umfangsbreite aller Zähne gleich ist und daß die einzelnen Zähne jeweils im gleichen Abstand zueinander angeordnet sind.

Das erste Teil weist $p_1 = Z_1 \pm N$ Paare von Nord- und Südpolen auf, wobei N eine ganze Zahl ist, und das zweite Teil weist $p_2 = N$ Paare von Nord- und Südpolen auf. Eine mögliche Kombination ist beispielsweise $Z_1 = 9$, $p_1 = 10$ und $p_2 = 1$. In diesem Fall ist N = 1.

Mit einer solchen Konstruktion wird ein sehr gleichmäßiger Verlauf des Drehmomentes erreicht.

Eine weitere vorteilhafte Ausgestaltung der Erfindung ist dadurch gekennzeichnet, daß die Paare von Nord- und Südpolen gleichmäßig und ohne Pollücken über den Umfang des ersten und des zweiten Teils verteilt sind, so daß das erste und das zweite Teil zylindrische Oberflächen aufweisen.

Die Reluktanz des Luftspaltes zwischen dem ersten und dem zweiten Teil des magnetischen Getriebes ist bei dieser Anordnung bei allen Winkelstellungen der einzelnen Teile immer konstant. Dadurch wird die Gleichmäßigkeit des Verlaufes des Drehmomentes weiter vergrößert.

Eine weitere vorteilhafte Ausgestaltung der Erfindung ist dadurch gekennzeichnet, daß das erste, das zweite und das dritte Teil konzentrisch zueinander angeordnet sind.

Dadurch wird eine über den gesamten Umfang maximale magnetische Kopplung der Teile untereinander erreicht.

Eine weitere vorteilhafte Ausgestaltung der Erfindung ist dadurch gekennzeichnet, daß das dritte Teil einstückig ausgebildet ist.

Dies ist fertigungstechnisch besonders günstig.

Eine weitere vorteilhafte Ausgestaltung der Erfindung ist dadurch gekennzeichnet, daß das mittlere, sich zwischen dem dritten und dem ersten Teil bzw. dem dritten und dem zweiten Teil befindliche Teil feststeht.

Das mittlere Teil kann dann Teil einer Trennwand beim Übertragen eines Drehmomentes z.B. in ein Vakuum hinein sein. Dadurch wird neben der Getriebefunktion gleichzeitig die Funktion einer magnetischen Kupplung erfüllt. Bei einer herkömmlichen magnetischen Kupplung schwächt die Trennwand die magnetischen Kopplungskräfte, wogegen die Trennwand hier aktiv bei der Kopplung mitwirkt.

Eine weitere vorteilhafte Ausgestaltung der Erfindung ist dadurch gekennzeichnet, daß die Magnetfelder in den Luftspalten zwischen den einzelnen Teilen überwiegend radial verlaufen.

Dadurch kompensieren sich die an den einzelnen Teilen angreifenden Kräfte weitgehend.

Das erfindungsgemäße magnetische Getriebe kann vorzugsweise in einem elektrischen Haushaltsgerät verwendet werden.

Hier macht sich insbesondere die geringe Geräuschentwicklung des magnetischen Getriebes vorteilhaft bemerkbar.

Einige schematisch dargestellte Ausführungsbeispiele der Erfindung werden nachfolgend anhand der Zeichnung in den Fig. 1 bis 3 näher erläutert. Es zeigen:

Fig. 1 ein magnetisches Getriebe mit drei magnetisch zusammenwirkenden, relativ zueinander beweglichen Teilen, wobei ein erstes und ein zweites Teil Permanentmagnete mit längs des Umfanges abwechselnden Nord- und Südpolen aufweisen und wobei das erste und das zweite Teil von einem dritten, magnetisch passiven Teil umschlossen werden, das als magnetisches Rückschlußelement dient und auf seiner Innenseite magnetisch leitende Zähne aufweist, die die von den Permanentmagneten erzeugten Magnetfelder modulieren,

Fig. 2a bis 2k den Bewegungsablauf des magnetischen Getriebes nach Fig. 1, wobei das innere zweite Teil von einer Antriebswelle gedreht wird, das mittlere erste Teil feststeht und das äußere dritte Teil mit einer Abtriebswelle verbunden ist,

Fig. 3a bis 3j den Bewegungsablauf des magnetischen Getriebes nach Fig. 1, wobei das innere zweite Teil von einer Antriebswelle gedreht wird, das mittlere erste Teil mit einer Abtriebswelle verbunden ist und das äußere dritte Teil feststeht.

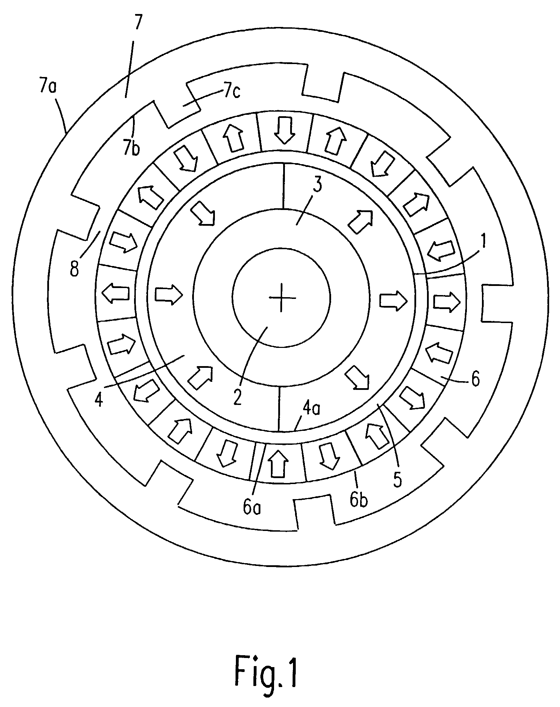

Fig. 1 zeigt ein magnetisches Getriebe, welches als zweites Teil einen Rotor 1 mit einem auf eine Welle 2 aufgesetzten Eisenring 3 aufweist. Auf dem Eisenring 3 sitzt ein erster Permanentmagnetring 4 mit der Polaarzahl $p_2 = 1$. Als erstes Teil ist ein zweiter Permanentmagnetring 6 vorgesehen, der den Rotor 1 unter Ausbildung eines ersten Luftspaltes 5 konzentrisch umschließt. Der zweite Permanentmagnetring 6 weist $p_1 = 10$ Paare von Nord- und Südpolen auf. Die Oberfläche 4a des ersten Permanentmagnetringes 4 sowie die beiden Oberflächen 6a und 6b des zweiten Permanentmagnetringes 6 sind als glatte Zylinderoberflächen ausgebildet. Als drittes Teil ist ein Eisenteil 7 vorgesehen, welches den Rotor 1 und den zweiten Permanentmagnetring 6 unter Ausbildung eines zweiten Luftspaltes 8 konzentrisch umschließt. Das Eisenteil 7 besteht aus einem Eisenjoch 7a, an dessen Innenseite 7b $Z_1 = 9$ Eisenzähne 7c angeordnet sind.

Das Eisenjoch 7a wirkt als magnetisches Rückschlußelement für den von dem ersten Permanentmagnetring 4 und dem zweiten Permanentmagnetring 6 erregten Magnetfluß. Der Querschnitt dieses Eisenjoches 7a ist so groß gewählt, daß das magnetische Material dieses Joches 7a während des Betriebes nicht in die Sättigung gerät.

Die Funktionsweise des magnetischen Getriebes kann anschaulich wie folgt erklärt werden. Das von dem ersten Permanentmagnetring 4 erzeugte Magnetfeld wird mittels der Zähne 7c des Eisenteils 7 moduliert. Dieses im zweiten Luftspalt 8 wirksame modulierte Magnetfeld wirkt dann mit dem zweiten Permanentmagnetring 6 zusammen, dessen Magnetpole sich nach dem modulierten Magnetfeld ausrichten.

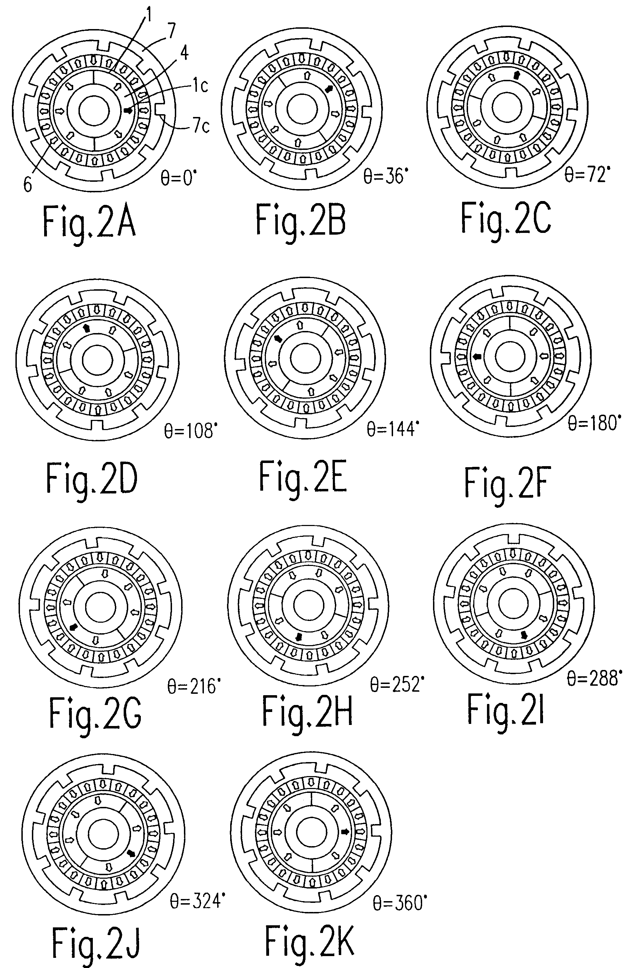

Die Fig. 2a bis 2k zeigen den Bewegungsablauf des magnetischen Getriebes nach Fig. 1 bei feststehendem zweiten Permanentmagnetring 6. Der Rotor 1 wird von der Antriebswelle 2 im Gegenuhrzeigersinn gedreht und überträgt ein Drehmoment auf das mit einer Abtriebswelle gekoppelte Eisenteil 7. Gemäß der Darstellung nach Fig. 1 wirken keine externen Kräfte auf das Eisenteil 7. Gemäß Fig. 2 ist die Rotordrehung des Rotors 1 in Schritten von 36° dargestellt. Zur Verdeutlichung der Funktionsweise ist auf dem Rotor 1 einer der Pfeile 1c dunkel unterlegt, die die lokale Magnetisierungsrichtung der Permanentmagneten des ersten Permanentmagnetringes 4 kennzeichnen. Ebenso ist auf dem Eisenteil 7 einer der Zähne 7c dunkel unterlegt.

Man erkennt aus Fig. 2 die Getriebewirkung, da sich das Eisenteil 7 um 40° im Uhrzeigersinn dreht, wenn sich der Rotor 1 um 360° entgegen dem Uhrzeigersinn dreht.

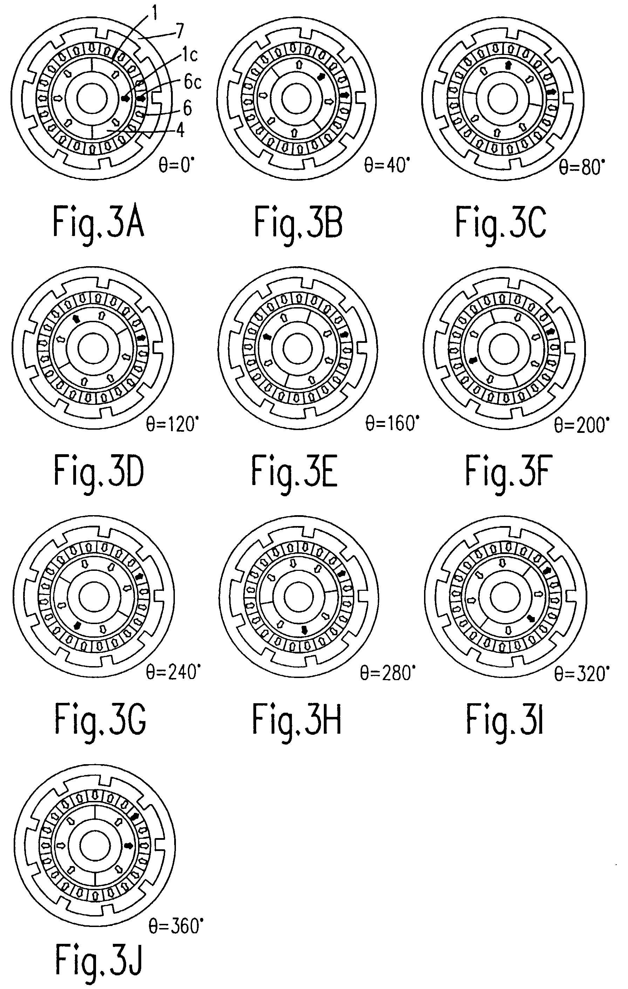

Die Fig. 3a bis 3j zeigen den Bewegungsablauf des magnetischen Getriebes nach Fig. 1 bei feststehendem Eisenteil 7. Der Rotor 1 wird von der Antriebswelle 2 im Gegenuhrzeigersinn gedreht und überträgt ein Drehmoment auf den mit einer Abtriebswelle gekoppelten zweiten Permanentmagnetring 6.

Gemäß der Darstellung nach Fig. 3 wirken keine externen Kräfte auf den Permanentmagnetring 6 ein.

Gemäß Fig. 3 ist die Rotordrehung des Rotors 1 in Schritten von 40° dargestellt. Zur Verdeutlichung der Funktionsweise ist auf dem Rotor 1 einer der Pfeile 1c dunkel unterlegt, die die lokale Magnetisierungsrichtung der Permanentmagneten des ersten Permanentmagnetringes 4 kennzeichnen. Ebenso ist auf dem zweiten Permanentmagnetring 6 einer der Pfeile 6c dunkel unterlegt, welche die lokale Magnetisierungsrichtung der Permanentmagneten des zweiten Permanentmagnetringes 6 bezeichnen.

Man erkennt aus Fig. 3 die Getriebewirkung, da sich der zweite Permanentmagnetring 6 um 36° entgegen dem Uhrzeigersinn dreht, wenn sich der Rotor 1 um 360° entgegen dem Uhrzeigersinn dreht.

**Patentansprüche**

1. Magnetisches Getriebe mit wenigstens drei magnetisch zusammenwirkenden, relativ zueinander beweglichen Teilen (1, 6, 7), von denen eines zur Verbindung mit einer Antriebswelle, eines zur Verbindung mit einer Abtriebswelle und eines als feststehendes Teil vorgesehen ist, wobei ein erstes (6) und ein zweites (1) Teil Permanentmagnete mit längs des Umfanges abwechselnden Nord- und Südpolen aufweisen, und wobei ein drittes Teil (7) Zähne (7c) aus magnetisch leitendem Material aufweist, die zur Modulation der von den Permanentmagneten erzeugten Magnetfelder vorgesehen sind, dadurch gekennzeichnet, daß das dritte Teil (7) ein als magnetisches Rückschlußelement wirkendes, in sich geschlossenes Joch (7a) und auf der Innenseite (7b) des Joches (7a) $Z_1$ magnetisch leitende Zähne (7c) aufweist, und daß das dritte Teil (7) das erste (6) und das zweite Teil (1) umschließt.

2. Magnetisches Getriebe nach Anspruch 1, dadurch gekennzeichnet, daß das erste Teil (6) $p_1$ Paare von Nord- und Südpolen aufweist, daß das zweite Teil

(1) $p_2$ Paare von Nord- und Südpolen aufweist, wobei $p_2 < p_1$ ist, und daß das erste Teil (6) mit der größeren Anzahl von Polen als mittleres Teil zwischen dem dritten (7) und dem zweiten Teil (1) angeordnet ist.

3. Magnetisches Getriebe nach Anspruch 1 oder 2, dadurch gekennzeichnet, daß die Paare von Nord- und Südpolen gleichmäßig über den Umfang des ersten (6) und des zweiten (1) Teils verteilt sind, daß die Zähne (7c) auf dem dritten Teil (7) gleichmäßig über den Umfang verteilt sind, daß das erste Teil (6) $p_1 = Z_1 \pm N$ Paare von Nord- und Südpolen aufweist, wobei N eine ganze Zahl ist, N=1,2,3...,
und
daß das zweite Teil (1) $p_2 = N$ Paare von Nord- und Südpolen aufweist.

4. Magnetisches Getriebe nach einem der Ansprüche 1 bis 3, dadurch gekennzeichnet, daß die Paare von Nord- und Südpolen gleichmäßig und ohne Pollücken über den Umfang des ersten (6) und des zweiten Teils (1) verteilt sind, so daß das erste (6) und das zweite Teil (1) zylindrische Oberflächen (4a, 6a, 6b) aufweisen.

5. Magnetisches Getriebe nach einem der Ansprüche 1 bis 4, dadurch gekennzeichnet, daß das erste (6), das zweite (1) und das dritte (7) Teil konzentrisch zueinander angeordnet sind.

6. Magnetisches Getriebe nach einem der Ansprüche 1 bis 5, dadurch gekennzeichnet, daß das dritte Teil (7) einstückig ausgebildet ist.

7. Magnetisches Getriebe nach einem der Ansprüche 1 bis 6, dadurch gekennzeichnet, daß das mittlere (6), sich zwischen dem dritten (7) und dem zweiten (1) Teil bzw. dem dritten und dem ersten Teil befindliche Teil feststeht.

8. Magnetisches Getriebe nach einem der Ansprüche 1 bis 8, dadurch gekennzeichnet, daß die Magnetfelder in den Luftspalten (5, 8) zwischen den einzelnen Teilen überwiegend radial verlaufen.

9. Elektrisches Haushaltsgerät mit einem magnetischem Getriebe nach einem der Ansprüche 1 bis 8.

Fig.1

Fig.2A θ=0°

Fig.2B θ=36°

Fig.2C θ=72°

Fig.2D θ=108°

Fig.2E θ=144°

Fig.2F θ=180°

Fig.2G θ=216°

Fig.2H θ=252°

Fig.2I θ=288°

Fig.2J θ=324°

Fig.2K θ=360°

Fig.3A     θ=0°

Fig.3B     θ=40°

Fig.3C     θ=80°

Fig.3D     θ=120°

Fig.3E     θ=160°

Fig.3F     θ=200°

Fig.3G     θ=240°

Fig.3H     θ=280°

Fig.3I     θ=320°

Fig.3J     θ=360°